# EUROPEAN PATENT SPECIFICATION

(11) **EP 0 415 389 B1**
(45) Date of publication and mention of the grant of the patent: **06.04.1994**
(21) Application number: 90116574.6
(22) Date of filing: 29.08.1990
(51) Int. Cl.: B60T 8/42, B60T 8/48, B60T 13/12

(54) **Brake system**
Bremssystem
Système de freinage

(30) Priority: 29.08.1989 JP 222177/89
(43) Date of publication of application: 06.03.1991
(73) Proprietor: SUMITOMO ELECTRIC INDUSTRIES, LTD., Osaka-shi, Osaka 541 (JP)
(72) Inventor: Takata, Koji, c/o Itami Works of Sumitomo, Itai-shi, Hyogo (JP); Fujimoto, Tsuyoshi, c/o Itami Works of Sumitomo, Itai-shi, Hyogo (JP); Hashida, Koichi, c/o Itami Works of Sumitomo, Itai-shi, Hyogo (JP)
(74) Representative: Glawe, Delfs, Moll & Partner

(56) References cited:
- DE-C- 3 812 829
- DE-C- 3 812 830
- GB-A- 2 179 715

## Description

This invention relates to a brake system for a vehicle which attains such objects as versatile and sophisticated control and improved pedal feeling with a minimum number of parts.

One typical example of prior art brake system capable of both antilock control and brake traction control is shown in Fig. 4 of US Patent 3667813.

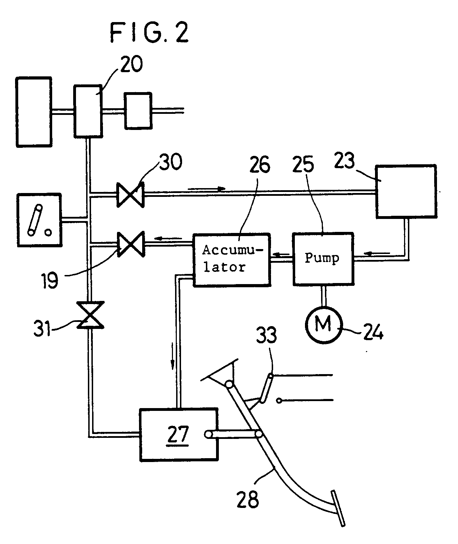

Although this prior art publication mainly describes a control method, since the basic elements of this prior art are concisely shown in its Fig. 4, the present invention is conveniently compared with this figure. Therefore, this figure is taken up as Fig. 2 to describe the prior art.

In this prior art, the output of a brake fluid pressure generator 27 adjusted by manual control is shut off by a solenoid valve 31. Instead, a dynamic pressure from a dynamic pressure source having a motor 24, a pump 25 and an accumulater 26 is introduced into a brake unit 20 through a solenoid valve 19 or pressure fluid therefrom is discharged into a reservoir 23 through a solenoid valve 30 to adjust the braking pressure.

Namely, three solenoid valves 31, 19 and 30 provided for each brake circuit are controlled by the commands from an electronic control unit to obtain a desired brake pressure irrespective of manual control.

One problem of the prior art brake system shown in Fig. 2 is that once the solenoid valve 31 is shut off, the brake unit 20 is completely separated from the manual control, so that the system cannot quickly respond to changes of the intention of the driver. Namely, in this system, once the solenoid valve 31 is closed, the system is controlled to attain the maximum declaration or acceleration irrespective of the intention of the driver until the change of the intention of the driver is transmitted to a brake switch 33, i.e. a pedal 28 is moved forward or backward to such an extent as to actuate the switch 33.

Of course it is desirable to quickly reflect the change of the intention of the driver during antilock control or automatic brake control such as traction control. The prior art brake system shown in Fig. 2 cannot meet this requirement.

To improve the pedal feeling, it is necessary both to shorten the pedal strike in normal conditions and to lighten the pedal force in case of failure of the dynamic pressure source. But the system arrangement shown in Fig. 2 cannot meet this requirement, either.

A brake-system according the preamble of claim 1 is shown in the DE-C 38 12 830, in which the two wheel brakes can be controlled independently of each other, if there is provided one valve for each brake. As there are further elements necessary for operating the valve, such an independently controlled brake-system needs a great number of elements and units making the system complicated and expensive.

It is an object of this invention to provide a brake system which obviates the abovesaid shortcomings and which is capable of reducing the braking force in accordance with the reduction of the pedal force even during antilock control, capable of increasing the braking force in accordance with the increase of the pedal force even during automatic brake control such a traction control, and capable of shortening the pedal stroke in normal conditions keeping a predetermined relationship between the pedal stroke and the vehicle deceleration, with a minimum number of parts.

According to this invention a brake-system is characterized by first check-valves, for introducing fluid from said output circuit, second check-valves for returning fluid from each of said controlled brake circuits back to said output circuit, and a solenoid change over valve for antilock control provided between said output circuit and said first check valves to close the communication therebetween during antilock control.

Further features of the inventive brake-system are shown in the subclaims 1 to 6.

With the brake-system according to this invention, by the provision of the above-described circuit network, any change of the intention of the driver can be reflected instantly to brake pressure during electronic pressure increase/decrease control (antilock control or automatic braking) and such a change of intention will thereafter appear as a change in the control stroke.

For control of the shortening of the pedal stroke, it is preferable to provide a stroke sensor on the brake pedal or a member associated therewith.

If the output circuit of the brake pressure generator includes no controlled brake circuit for automatic brake control, no solenoid changeover valve for automatic braking has to be provided between the output circuit and the check valves for returning fluid.

In normal conditions, i.e. while neither the antilock control nor the automatic brake control such as traction control is being carried out, the flow control valves are actuated with the solenoid changeover valves kept deactivated (kept open) to introduce pressure fluid into the controlled brake circuits from the dynamic pressure source (or to discharge it from the controlled brake circuits into the reservoir) so that the pedal stroke will be controlled in a predetermined relation with respect to the deceleration. Namely, in normal conditions, the pedal stroke shortening control is carried out.

During antilock control, i.e. when a tendency toward excessive slip is detected, the solenoid changeover valves for antilock control will be actuated. If the output fluid pressure from the brake pressure generator is higher than the pressure in the controlled brake circuits when the solenoid changeover valves for antilock are actuated, the pressure in each of the controlled brake circuits is adjusted independently by the flow control valves in each circuit. But if the abovementioned output pressure gets lower than the pressure in the controlled brake circuits as a result of relexation of the pedal force, the fluid in the controlled brake circuits will return to the output circuit through the check valves for fluid return, thus lowering the brake pressure to the level corresponding to the pedal force. When the tendency toward excessive slip disappears with the decrease in the brake pressure, the antilock control is stopped and the solenoid changeover valves for antilock are deactivated, thus the system returns to the normal control mode. Namely, the braking force is reduced quickly in response to the relaxation of the pedal force.

During the automatic brake mode such as traction control, the solenoid changeover valves for automatic braking are actuated. The pressure in the controlled brake circuits is controlled by the flow control valves. If in this state the driver shows his intention to brake by depressing the pedal, the output pressure from the brake pressure generator will increase. When this output pressure exceeds the brake pressure in the controlled brake circuits (which is generated based on the automatic brake control), pressure fluid will flow from the brake pressure generator into the brake circuits through the check valves for introducing fluid to increase the brake pressure to the level corresponding to the pedal force. As a result, the wheels will show a braking bahavior in response to a force corresponding to the pedal force. Thus, the automatic brake control will be stopped and the solenoid valves for automatic brake control will return to their inoperative position. Namely, even during automatic brake control such as traction control, once the driver shows his intention of braking, the braking force corresponding to the intention of the driver can be produced quickly.

This will make it possible to reduce the effective sectional area of the piston of the static pressure generator and thus to lighten the pedal force during failure in the dynamic pressure source.

Other features and objects of the present invention will become apparent from the following description taken with reference to the accompanying drawings, in which:
Fig. 1 is a circuit diagram of the embodiment of this invention; and
Fig. 2 is a block diagram of a prior art brake system.

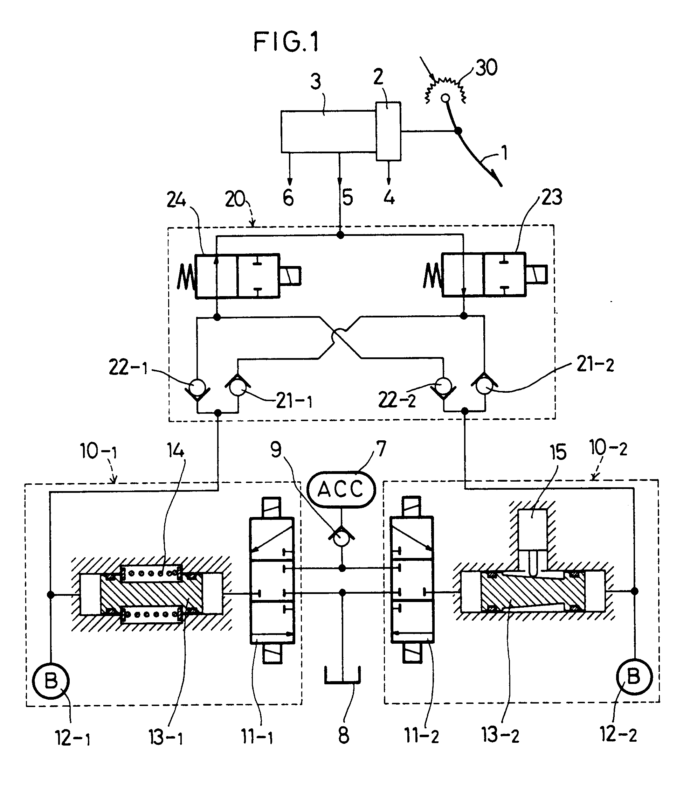

Referring to Fig. 1, by controlling a pedal 1 manually, a brake fluid pressure is generated from brake pressure generators 2 and 3 (a booster 3 amplifies the pedal force and gives it to the master cylinder 2) to output circuits comprising a dynamic pressure line 4 and a static pressure line 5. A tandem master cylinder may be used to provide another static pressure line 6 in place of the dynamic pressure line 4. Also, the circuit may comprise the three lines 4 - 6. Since these circuits are controlled on the same principle, we shall describe for the output circuit 5 only. In the drawing, identical parts are represented by identical numerals followed by small numbers -1 and -2 but in the specification these small numbers are omitted at some places.

As shown in Fig. 1, one or more controlled brake circuits 10 belong to one output circuit 5. Each controlled brake circuit 10 comprises one normally closed flow control valve 11 and one or more wheel brakes 12 belonging to the valve 11.

The flow control valves 11 serve to open and close the lines between a dynamic pressure source 7 and a reservoir 8 and the respective circuits 10. By the action of the valves 11, the pressure fluid in the source 7 is admitted into the circuits 10 or the pressure fluid in the circuits 10 is discharged into the reservoir 8. Thus the fluid pressure of the brake 12 belonging to each controlled brake circuit 10 is electronically controlled.

The dynamic pressure source 7 and the reservoir 8 may have some of their elements shared with the brake pressure generators 2 and 3. Also, as with the prior art brake system shown in Fig. 2, the flow control valve may be a combination of two solenoid valves or a more sophisticated flow-variable control valve.

In the embodiment shown in Fig. 1, two controlled brake circuits 10-1 and 10-2 having wheel brakes 12-1 and 12-2, respectively, are connected to a single output circuit 5. A circuit network 20, which is a characterizing feature of the present invention, is provided between the output circuit 5 of the brake pressure generator and the controlled brake circuits 10.

This circuit network 20 comprises check valves 21-1 and 21-2 for introducing fluid and check valves 22-1 and 22-2 for returning fluid, each pair for the respective controlled brake circuits 10, and a solenoid changeover valve 23 for antilock control located upstream of the check valves 21 for introducing fluid and a solenoid changeover valve 24 for automatic brake control such as traction control located upstream of the check valves 22. One pair of the valves 23 and 24 is provided for each output circuit.

A stroke sensor 30 for use in the control for shortening of the pedal stroke is provided on a brake pedal 1 or a member associated therewith.

Though not shown in the figure, these flow control valves, solenoid changeover valves and sensors (only some of them are shown) are all connected to an electronic control unit (not shown).

Next, the operation of the brake system according to this invention will be described.

While the solenoid valves 23 and 24 are deactivated, the output circuit 5 communicates with the controlled brake circuits 10 through the check valves 21 and 22 arranged in parallel with and in opposite working direction to each other. In this state, when a dynamic pressure is introduced from the pressure source 7 through the flow control valves 11 belonging to the static pressure brake circuits, the pedal stroke will be shortened. Thus, by controlling the flow control valves 11 in such a manner that the pedal stroke and the deceleration are in a predetermined relationship with each other, the pedal stroke can be shortened while keeping a desired relationship with respect to the deceleration.

When the solenoid changeover valve 23 for antilock control is activated, the introducing side of the circuit network is shut off by the valve 23 and if the output pressure of the brake pressure generator is higher than the pressure in the controlled brake circuits, the return side, too, is shut off by the valves 22. Further, since the check valves 21 are provided between the controlled brake circuits 10-1 and 10-2 in opposite ways to each other, the controlled brake circuits are also out of communication with each other. Thus each controlled brake circuit is controlled independently by the respective flow control valve 11.

On the other hand, if the output pressure of the brake pressure generator gets lower than the pressure in the controlled brake circuits owing to the relaxation of the pedal force, pressure fluid is returned through the valves 22 and thus the brake pressure drops to the level of the output pressure of the brake pressure generator.

When the tendency toward excessive slip disappears from all the controlled brake circuits as a result of the reduction in the braking pressure, the solenoid changeover valves for antilock will be deactivated so that the system will return to the normal stroke shortening control. But if the pedal force is relaxed to a medium degree while the vehicle is running on what is called a split road surface, the tendency toward excessive slip might not disappear from the wheels on the low-µ road surface in spite of the fact that the brake pressure has dropped to a level corresponding to the pedal force. In other words, they should remain under the antilock control. On the other hand, such an excessive slip tendency will disappear from the wheels on the high-µ road surface. In such a case, it is necessary to keep the solenoid changeover valves for antilock activated in order to maintain the antilock control for the wheels on the low-µ road. On the other hand, if the antilock control is kept for the wheels on the high-µ road, the dynamic pressure will keep flowing through the flow control valves because these wheels are not showing a tendency toward excessive slippage. The dynamic pressure will then flow into the brake pressure generator and push the pedal backward. In order to prevent an excessive pedal pushback, it is preferable to provide a special control pattern to stop the flow of fluid through the flow control valves for at least a predetermined period of time when the pushing back of the pedal is detected and thereafter to allow only a moderate introduction of fluid. This is because, in an ordinary antilock control pattern (which is applied when the controlled brake pressure is lower than the output pressure), when the tendency toward excessive slippage disappears, the pressure in the controlled brake circuits is increased at a relatively quick rate until it reaches the output pressure corresponding to the pedal force, watching the possible occurrence of another tendency toward excessive slippage. This relatively quick rate is necessary to be prepared for the possible transition from low-µ road to high-µ road in the case of normal antilock control.

When the solenoid valve 24 is activated during automatic braking such as traction control, the return side will be shut off by it. If the pressure of the controlled brake circuits is higher than the output pressure of the brake pressure generator, the introduction side, too, is shut off by the valves 21. Further, due to the fact that the two check valves 22 are provided between the controlled brake circuits 10-1 and 10-2 in series and in opposite ways to each other, the communication between these controlled brake circuits 10 is closed, too. Thus the controlled brake circuits are controlled independently of each other by the respective flow control valve 11.

When the pedal force increases and thus the output pressure of the brake pressure generator becomes higher than the pressure of the controlled brake circuits 10, pressure fluid is introduced through the valves 21, increasing the brake pressure to the level of the output pressure of the brake pressure generator. Thus the pedal will be more or less pushed in. In response, the control will be stopped outright, in case it is a traction control, thus deactivating the solenoid changeover valves for automatic brake control. Thus the system can return to the normal stroke shortening control. In case of automatic brake control of a different type, it is possible to take interim measures depending upon the type of control.

It will be apparent from the above description that the solenoid changeover valve 24 is not an essential part if an output circuit includes no controlled brake circuits which should carry out automatic braking such as traction control but it is essential to provide both the check valves 21 and 22 if there are provided a plurality of controlled brake circuits.

In applying the present invention to a static pressure line, because it is not desirable to allow the fluid from the static pressure generator to be mixed with the fluid from the dynamic pressure source, driving pistons 13 should preferably be provided between the respective brakes 12 and the flow control valves 11 to allow only the transmission of pressure therebetween while preventing fluid communication. (No such consideration is necessary with a dynamic pressure line. Thus when applying the present invention to a dynamic pressure line such as the output circuit 4 in Fig. 1, the driving pistons 13 can be omitted).

If the driving pistons 13 are used, they should be of a two-way type, and it is necessary to provide means for returning them to their respective neutral positions during non-control phase. Such means may be a return spring 14 mounted on the two-way driving piston 13-1 to force the piston automatically to return to its neutral position when the pressure difference at both ends thereof becomes small. Or else, as with the driving piston 13-2, a stroke sensor 15 may be provided on the piston to detect its neutral position and control the fluid pressure by using the flow control valve 11-2 to return the piston to the neutral position.

Further in applying the present invention to a static pressure line, a check valve 9 may be provided to prevent a backflow when the manual control force increases above the pressure from the dynamic pressure source.

In the preferred embodiment, two controlled brake circuits are provided for each brake pressure generator and one wheel brake is provided for each controlled brake circuit. But one or three or more controlled brake circuits may be provided for an output circuit. Also, two or more wheel brakes may be provided for a controlled brake circuit.

In normal conditions, the pedal stroke may be shortened by comparing the pedal stroke with the deceleration of the vehicle. If the driving pistons 13 and their stroke sensors 15 are provided, the pedal stroke may be shortened by controlling the relation between the stroke of the driving piston and the deceleration, between the stroke of the driving pistons and the pedal stroke, or between the stroke of driving pistons and the manual control force or the fluid pressure proportional thereto (a pressure sensor is necessary in this case) in a predetermined manner.

## Claims

1. A brake system comprising a manually controlled brake pressure generator (2,3) having at least one output circuit (4-6), independently controlled brake circuits (10) belonging to said output circuit and each having at least one wheel brake (12) and a flow control valve (11) for electronically controlling the pressure of said wheel brake, a dynamic pressure source (7), a reservoir (8), a sensor such as a wheel speed sensor, an electronic control unit,
characterized by first check valves (21) for introducing fluid from said output circuit to each of said controlled brake circuit (10),
second check valves (22) for returning fluid from each of said controlled brake circuit back to said output circuit (10), and
a solenoid changeover valve (23) for antilock control provided between said output circuit and said first check valves (21) to close the communication therebetween during antilock control.

2. A brake system as claimed in claim 1, wherein another solenoid changeover valve (24) for automatic braking such as traction control is provided between said output circuit (4-6) and said second check valves (22) to close the communication therebetween during automatic braking such as traction control.

3. A brake system as claimed in claim 1 or 2, wherein a two-way driving piston (13) is provided in the controlled brake circuit (10) which belongs to a static pressure output circuit (5,6) of said brake pressure generator to separate a static pressure portion including said wheel brake and a dynamic pressure portion including said flow control valve from each other so that only pressure transmission will take place therebetween.

4. A brake system as claimed in claim 1 or 2, wherein a sensor (30) for detecting the manual control stroke is further provided and antilock control or automatic brake control such as traction control is discontinued when a retreat or an advance of manual control element such as brake pedal is ovserved during antilock control or automatic braking control such as tractor control.

5. A brake system as claimed in claim 1 or 2, wherein a sensor (30) for detecting the manual control is further provided and said flow control valves (11) are controlled so that the manual control stroke will be in a predetermined relationship with the deceleration of the vehicle, while neither antilock control nor automatic braking such as traction control is carried out.

6. A brake system as claimed in claim 4, wherein if the reduction of stroke is detected by said manual control stroke sensor (30) during antilock control, the increase in the pressure in the controlled brake circuits (10) which are not showing any tendency toward excessive slippage is restricted to a lower level than that in normal antilock control and, if no tendency toward excessive slippage is detected in all of the controlled brake circuits (10) that belong to an output circuit, the antilock control of said output circuit is stopped and the solenoid changeover valves (23) for antilock control is deactivated.

## Patentansprüche

1. Bremssystem, das aufweist, einen manuell gesteuerten Druckerzeuger (2,3) mit wenigstens einem Ausgangskreis (4-6), unabhängig gesteuerte Bremskreise (10), die zu dem Ausgangskreis gehören und jeder wenigstens eine Radbremse (12) und ein Stromsteuerventil (11) zum elektronischen Steuern des Druckes der Radbremse hat, eine dynamische Druckquelle (7), einen Behälter (8), einen Sensor, beispielsweise einen Radgeschwindigkeitssensor, eine elektronische Steuereinheit, **gekennzeichnet durch** erste Rückschlagventile (21) zum Zuführen von Fluid aus dem Ausgangskreis zu jedem gesteuerten Bremskreis (10), zweite Rückschlagventile (22) zum Zurückführen von Fluid aus jedem gesteuerten Bremskreis zu dem Ausgangskreislauf (10) zurück, und ein Magnet-Wegeventil (23) für eine Antiblockier-Steuerung, das zwischen dem Ausgangskreis und den ersten Rückschlagventilen (21) zum Schließen der Verbindung dazwischen vorgesehen ist.

2. Bremssystem nach Anspruch 1, in dem ein weiteres Magnet-Wegeventil (24) zum automatischen Bremsen, beispielsweise eine Bodenhaftungssteuerung, zwischen dem Ausgangskreis (4-6) und den zweiten Rückschlagventilen (22) vorgesehen ist, um während des automatischen Bremsens, beispielsweise einer Bodenhaftungssteuerung, die Verbindung dazwischen zu schließen.

3. Bremssystem nach Anspruch 1 oder 2, in dem ein Zweiwege-Antriebskolben (13) in dem gesteuerten Bremskreis (10) vorgesehen ist, der zu einem statischen Druckausgangskreis (5,6) des Bremsdruckerzeugers gehört, um einen statischen Druckabschnitt, einschließlich der Radbremse, und einen dynamischen Druckabschnitt, einschließlich des Stromventils, voneinander zu trennen, so daß nur Druckübertragung dazwischen stattfindet.

4. Bremssystem nach Anspruch 1 oder 2, in dem weiter ein Sensor (30) zum Feststellen des manuellen Steuerhubes vorgesehen ist und eine Antiblockier-Steuerung oder automatische Bremssteuerung, beispielsweise eine Bodenhaftungssteuerung unterbrochen ist, wenn ein Rückziehen oder ein Vorschieben eines manuellen Steuerteils, beispielsweise eines Bremspedals, während einer Antiblockier-Steuerung oder automatischen Bremssteuerung, beispielsweise eine Traktorsteuerung, beobachtet wird.

5. Bremssystem nach Anspruch 1 oder 2, in dem weiter ein Sensor (30) zum Feststellen der manuellen Steuerung vorgesehen ist und die Stromsteuerventile (11) so gesteuert sind, daß der manuelle Steuerhub in einer vorbestimmten Beziehung zu der Verzögerung des Fahrzeugs steht, während weder eine Antiblockier-Steuerung noch ein automatisches Bremsen, beispielsweise eine Bodenhaftungssteuerung, ausgeführt wird.

6. Bremssystem nach Anspruch 4, in dem, wenn durch den Sensor (30) für den manuellen Steuerhub die Reduzierung des Hubes während einer Antiblockier-Steuerung festgestellt ist, der Druckanstieg in den gesteuerten Bremskreisen (10), die keine Tendenz zu übermäßigem Schlupf zeigen, auf ein niedrigeres Niveau als das bei normaler Antiblockier-Steuerung beschränkt ist und wenn keine Tendenz zu übermäßigem Schlupf in allen gesteuerten Bremskreisen (10), die zu einem Ausgangskreis gehören, festgestellt ist, die Antiblockier-Steuerung des Ausgangskreises gestoppt und das Magnet-Wegeventil (23) für eine Antiblockier-Steuerung inaktiviert ist.

## Revendications

1. Système de freinage comportant un générateur de pression de freinage commandé manuellement (2, 3) présentant au moins un circuit de sortie (4 à 6), des circuits de freinage commandés de manière indépendante (10) appartenant audit circuit de sortie et présentant chacun au moins un frein de roue (12) et une vanne de commande de débit (11) pour commander électroniquement la pression dudit frein de roue, une source de pression dynamique (7), un réservoir (8), un détecteur tel qu'un détecteur de vitesse de roue, une unité de commande électronique, caractérisé par
des premiers clapets anti-retour (21) pour introduire le fluide dudit circuit de sortie à chacun desdits circuits de freinage commandés (10),
des deuxièmes clapets anti-retour (22) pour faire retourner le fluide provenant de chacun desdits circuits de freinage commandés vers ledit circuit de sortie (10), et
une électrovanne de commutation (23) pour une commande antiblocage prévue entre ledit circuit de sortie et lesdits premiers clapets anti-retour (21) pour fermer la communication entre eux pendant la commande antiblocage.

2. Système de freinage selon la revendication 1, dans lequel une autre électrovanne de commutation (24) pour le freinage automatique tel que la commande de traction est prévue entre ledit circuit de commande (4 à 6) et lesdits deuxièmes clapets anti-retour (22) pour fermer la communication entre eux pendant le freinage automatique tel que la commande de traction.

3. Système de freinage selon la revendication 1 ou 2, dans lequel un piston d'entraînement à double effet (13) est prévu dans le circuit de freinage commandé (10) qui appartient à un circuit de pression statique de sortie (5, 6) dudit générateur de pression de freinage pour séparer l'une de l'autre une partie de pression statique incluant ledit frein de roue et une partie de pression dynamique incluant ladite vanne de commande de débit, de sorte que seule une transmission de pression aura lieu entre elles.

4. Système de freinage selon la revendication 1 ou 2, dans lequel un détecteur (30) pour détecter la course de commande manuelle est en outre prévu et la commande antiblocage ou la commande de freinage automatique telle que la commande de traction est interrompue quand on observe un recul ou une avance d'un élément de commande manuel tel que la pédale de frein pendant la commande antiblocage ou la commande de freinage automatique telle que la commande de traction.

5. Système de freinage selon la revendication 1 ou 2, dans lequel un détecteur (30) pour détecter la commande manuelle est en outre prévu et lesdites vannes de commande de débit (11) sont commandées de sorte que la course de commande manuelle sera une fonction prédéterminée de la décélération du véhicule, tant qu'on n'effectue ni de commande antiblocage, ni de freinage automatique tel que la commande de traction.

6. Système de freinage selon la revendication 4, dans lequel si la réduction de la course est détectée par ledit détecteur (30) de course de commande manuelle pendant la commande antiblocage, l'augmentation de la pression dans les circuits de freinage commandés (10) qui ne présentent aucune tendance à un patinage excessif est limitée à un niveau plus faible que dans une commande antiblocage normale et, si aucune tendance à un patinage excessif n'est détectée, dans tous les circuits de freinage commandés (10) qui appartiennent à un circuit de sortie, la commande antiblocage dudit circuit de sortie est arrêtée et l'électrovanne de commutation (23) pour la commande antiblocage est désactivée.
